# EUROPÄISCHE PATENTSCHRIFT

(11) **EP 1 108 336 B1**
(45) Veröffentlichungstag und Bekanntmachung des Hinweises auf die Patenterteilung: **06.10.2004**
(21) Anmeldenummer: 99944233.8
(22) Anmeldetag: 01.07.1999
(51) Int. Cl.: H04Q 7/24

(54) **DRAHTLOSES KOMMUNIKATIONSSYSTEM ZUR ÜBERMITTLUNG VON SPRACHDATEN IN ASYNCHRONEN DATENPACKETEN**
WIRELESS COMMUNICATION SYSTEM FOR TRANSMITTING VOICE DATA IN ASYNCHRONOUS DATA PACKETS
SYSTEME DE COMMUNICATION SANS FIL POUR LA TRANSMISSION DE DONNEES VOCALES EN PAQUETS DE DONNEES ASYNCHRONES

(30) Priorität: 13.08.1998 DE 19836750
(43) Veröffentlichungstag der Anmeldung: 20.06.2001
(73) Patentinhaber: SIEMENS AKTIENGESELLSCHAFT, 80333 München (DE)
(72) Erfinder: RODLER, Hermann, D-82041 Oberhaching (DE); KOKOT, Mathias, D-81373 München (DE)
(86) Internationale Anmeldenummer: PCT/DE1999/001948
(87) Internationale Veröffentlichungsnummer: WO 2000/010351

(56) Entgegenhaltungen:
- US-A- 5 475 689
- US-A- 5 544 164
- GRILLO D ET AL: "A COMBINED LLC/MAC TRAFFIC ANALYSIS OF THE RADIO INTERFACE IN TDMA-BASED THIRD GENERATION MOBILE SYSTEMS" PROCEEDINGS OF THE VEHICULAR TECHNOLOGY SOCIETY CONFERENCE (VTSC),US,NEW YORK, IEEE, Bd. CONF. 42, 10. Mai 1992 (1992-05-10), Seite 848-851 XP000339915 ISBN: 0-7803-0673-2
- KHAN J Y ET AL: "A mixed voice and data protocol for digital cellular radio" SIXTH INTERNATIONAL CONFERENCE ON MOBILE RADIO AND PERSONAL COMMUNICATIONS (CONF. PUBL. NO.351), IEE, 11. Dezember 1991 (1991-12-11), Seiten 108-114, XP002124844 London, COVENTRY, UK ISBN: 0-85296-530-3

## Beschreibung

Bei vielen Kommunikationssystemen werden Endgeräte, die unterschiedlichen Zwecken dienen können, wie z.B. einem Übertragen von Sprach-, Video-, Fax-, Datei-, Programm- und/oder Meßdaten, in zunehmendem Maße drahtlos angekoppelt. Derartige mobile Endgeräte sind häufig über eine mehrkanalige Luftschnittstelle an eine Basisstation gekoppelt, die ihrerseits an ein Kommunikationsnetz angeschlossen ist. Unter mobilen Endgeräten sollen im folgenden auch sogenannte schnurlose Endgeräte verstanden werden. Über die Basisstation werden Verbindungen zwischen den daran angekoppelten mobilen Endgeräten und weiteren, an das Kommunikationsnetz angeschlossenen Endeinrichtungen erstellt. Die Basisstation fungiert dabei unter anderem als Umsetzer zwischen im Kommunikationsnetz verwendeten Übertragungsprotokollen und Übertragungsprotokollen der Luftschnittstelle.

Die beschriebene Art einer drahtlosen Netzanbindung ist insbesondere bei mobilen Endgeräten zur Sprachkommunikation sehr gebräuchlich. In diesem Zusammenhang betrifft die Erfindung ein auch zur Sprachkommunikation vorgesehenes Kommunikationssystem mit einer an ein Kommunikationsnetz anschließbaren Basisstation und daran drahtlos angekoppelten, mobilen Endgeräten.

Bisher sind zur Sprachkommunikation vorgesehene Basisstationen bekannt, die an einem ISDN-Kommunikationsnetz, wie z.B. dem öffentlichen Fernsprechnetz, zu betreiben sind. Über solche Basisstationen können Verbindungen zwischen den mobilen Endgeräten und weiteren, an das ISDN-Kommunikationsnetz angeschlossenen Endeinrichtungen erstellt werden. Die Basisstationen verfügen dazu über Einrichtungen zum Umsetzen zwischen einem im ISDN-Kommunikationsnetz verwendeten ISDN-Übertragungsprotokoll und einem Übertragungsprotokoll der Luftschnittstelle.

Häufig können parallel zur Sprachübertragung auch Daten anderer Kategorien, wie z.B. Videodaten oder im Rahmen einer drahtlosen Anbindung eines tragbaren Rechners an ein Datennetz auszutauschende Dateidaten, zwischen ISDN-Kommunikationsnetz und mobilen Endgeräten über die Basisstation ausgetauscht werden. Anders als digitalisierte Sprachsignale, die mit weitgehend konstanter Datenrate zu übertragen sind, treten zu übermittelnde Dateidaten jedoch häufig stoßweise, d.h. mit stark variierender Datenrate, auf. Da ein ISDN-Kommunikationsnetz für eine synchrone Datenübertragung ausgelegt ist und deshalb keine dynamische Bandbreitenvariation erlaubt, kann bei einer Übertragung stoßweise anfallender Dateidaten eine Überlastungssituation auftreten, wenn die Datenrate der Dateidaten temporär eine vorgegebene Übertragungsbandbreite übersteigt. Zur Vermeidung einer solchen Situation müssen die Dateidaten entweder zwischengespeichert (gepuffert) werden - was ihre Übertragung verzögert - oder es muß eine sich nach der zu erwartenden Spitzendatenrate bemessende, oft unverhältnismäßig hohe Übertragungsbandbreite vorgesehen werden.

In vielen Fällen sind Daten zwischen einem mobilen Endgerät und einem externen Datennetz, wie z.B. dem Internet oder einem anderen zur Kommunikation von Datenverarbeitungsanlagen vorgesehenen Netzwerk, auszutauschen. Bei einer an einem ISDN-Kommunikationsnetz zu betreibenden Basisstation erfordert ein solcher Datenaustausch jedoch eine zusätzliche Einrichtung, z.B. ein Modem oder einen sogenannten Gateway-Rechner, mit dem die Daten zwischen dem externen Datennetz und dem ISDN-Kommunikationsnetz umgesetzt werden.

In diesem Zusammenhang offenbart das Dokument US 5,544,164 ein Kommunikationssystem, bei dem Datenpakete in Form von ATM-Zellen über ein Kabel-TV-System zu einer Basisstation, und von dieser weiter zu mobilen Endgeräten übertragen werden.

Aufgabe der vorliegenden Erfindung ist es, ein auch für Sprachkommunikation vorgesehenes Kommunikationssystem anzugeben, das mit wenigstens einer Basisstation und drahtlos angekoppelten mobilen Endgeräten ausgestattet ist, und das mit geringem Aufwand einen Datenaustausch über externe Datennetze erlaubt.

Gelöst wird diese Aufgabe erfindungsgemäß durch ein Kommunikationssystem mit den Merkmalen des Patentanspruchs 1.

Ein wesentlicher Vorteil des erfindungsgemäßen Kommunikationssystems besteht darin, daß es über die Basisstation direkt an ein paketvermittelndes Kommunikationsnetz, wie z.B. das Internet oder ein Datennetz, angekoppelt werden kann. Zusätzliche Einrichtungen zum Umsetzen von mit dem Kommunikationsnetz auszutauschenden Daten, wie z.B. ein Modem oder ein Gateway-Rechner, sind dabei nicht erforderlich. Da ein Transport von Sprachdaten oder anderen Nutzdaten im erfindungsgemäßen Kommunikationssystem wie in einem paketvermittelnden Kommunikationsnetz auf einer asynchronen Übertragung von Datenpaketen beruht, können bei Verwendung eines gemeinsamen Übertragungsprotokolls, wie z.B. des Internet-Protokolls, die Datenpakete direkt zwischen dem erfindungsgemäßen Kommunikationssystem und einem paketvermittelnden Kommunikationsnetz ausgetauscht werden. Das erfindungsgemäße Kommunikationssystem kann damit mit wenig Aufwand in ein paketvermittelndes Kommunikationsnetz integriert werden, was insbesondere im Hinblick auf die gegenwärtige Entwicklung immer leistungsfähigerer paketvermittelnder Kommunikationsnetze eine vorteilhafte Eigenschaft ist.

Weiterhin können mit dem erfindungsgemäßen Kommunikationssystem neben Sprachdaten auch Daten anderer Kategorien, wie z.B. Video-, Fax-, Datei-, Programm- oder Meßdaten, ebenfalls innerhalb asynchron zu übertragender Datenpakete übermittelt werden. Die Datenpakete werden von der Routereinrichtung anhand einer in den jeweiligen Datenpaketen enthaltenen Adressierungsinformation weitergeleitet. Da die Weiterleitung von Datenpaketen unabhängig von der Kategorie der in den Datenpaketen enthaltenen Daten erfolgen kann, ist in der Basisstation keine Unterscheidung oder Sonderbehandlung von Daten unterschiedlicher Kategorien erforderlich. Eine Differenzierung nach der Kategorie der zu übertragenden Daten ist erst in einem jeweiligen Ziel-Endgerät notwendig. Damit können die Vorteile, die mit einer integrierten Sprach- und Datenübermittlung in drahtgebundenen paketvermittelnden Kommunikationsnetzen verbunden sind, auf drahtlose Kommunikationssysteme übertragen werden.

Ein weiterer Vorteil des erfindungsgemäßen Kommunikationssystems besteht darin, daß sich eine Übertragungsrate mit der Sprachdaten oder Daten anderer Kategorie übermittelt werden, auf einfache Weise dem aktuellen Datenaufkommen anpassen läßt, indem die Rate, mit der die zu übermittelnden Datenpakete erzeugt und/oder übertragen werden, entsprechend variiert wird.

Eine in den mobilen Endgeräten enthaltene Sprachkomprimiereinrichtung dient zur Komprimierung der über die Luftschnittstelle zu sendenden Sprachdaten, wodurch weniger Übertragungsbandbreite bei der Luftschnittstelle belegt wird. Entsprechend dient eine in den mobilen Endgeräten enthaltene Sprachdekomprimiereinrichtung zur Dekomprimierung von über die Luftschnittstelle empfangenen Sprachdaten, die vor der Übertragung über der Luftschnittstelle zu deren Entlastung komprimiert wurden.

Vorteilhafte Ausführungsformen und Weiterbildungen der Erfindung sind in den Unteransprüchen angegeben.

Das erfindungsgemäße Kommunikationssystem läßt sich mit Luftschnittstellen gemäß unterschiedlichen Standards realisieren, wobei auch mehrere Standards kombinierbar sind. Vorteilhafte Ausführungsformen ergeben sich insbesondere mit Luftschnittstellen gemäß den ETSI-Standard-Definitionen DECT (Digital Enhanced Cordless Telecommunications), DCS (Digital Cellular System) oder GSM (Global System for Mobile Communication) oder einer Luftschnittstelle gemäß der zur Standardisierung vorgeschlagenen UMTS-Definition (Universal Mobile Telecommunication System); ferner mit Luftschnittstellen gemäß der ARI-Standard-Definition PHS(Personal Handyphone System).

Nach einer vorteilhaften Weiterbildung der Erfindung ist in der Basisstation eine Detektoreinrichtung enthalten, mit der anhand von in einzelnen Datenpaketen enthaltenen Prioritätsinformationen überprüft werden kann, ob die Anwendungen, denen die Datenpakete zugeordnet sind, Quasiechtzeitanwendurigen mit vorgegebener maximal zulässiger Paketübertragungsdauer sind. Ferner ist gemäß dieser Weiterbildung der Erfindung in der Basisstation eine Priorisiereinrichtung enthalten, die eine bevorzugte Übertragung von einer Quasiechtzeitanwendung zugeordneten Datenpaketen veranlaßt. Bei einer bevorzugten Übertragung von Datenpaketen können auch mehrere unterschiedliche Prioritätsklassen berücksichtigt werden, denen die Datenpakete anhand der darin enthaltenen Prioritätsinformationen zugeordnet werden.

Nach einer weiteren vorteilhaften Weiterbildung der Erfindung kann auch die Basisstation eine Sprachkomprimiereinrichtung und/oder eine Sprachdekomprimiereinrichtung enthalten. Die Sprachkomprimiereinrichtung dient dabei dazu, unkomprimierte von den weiteren Endgeräten zu den mobilen Endgeräten zu übertragende Sprachdaten vor der Übertragung über die Luftschnittstelle zu komprimieren. Entsprechend ist die Sprachdekomprimiereinrichtung dazu vorgesehen, komprimierte, von den mobilen Endgeräten zu den weiteren Endgeräten zu übertragende Sprachdaten vor Übertragung ins Kommunikationssystem zu dekomprimieren. Eine derart ausgestattete Basisstationen hat den Vorteil, daß mit den ans Kommunikationsnetz gekoppelten weiteren Endgeräten auch umkomprimierte Sprachdaten ausgetauscht werden können, wodurch die Notwendigkeit einer Abstimmung der im erfindungsgemäßen Kommunikationssystem und in den weiteren Endgeräten verwendeten Sprachkomprimierverfahren entfällt.

Ein Ausführungsbeispiel der Erfindung wird nachfolgend anhand der Zeichnung näher erläutert.

### Dabei zeigen

Fig 1 ein Kommunikationssystem mit einer Basisstation und mobilen Endgeräten, die über die Basisstation mit weiteren Endgeräten gekoppelt sind, in schematischer Darstellung,
Fig 2 die Basisstation in schematischer Darstellung,
Fig 3 ein mobiles Endgerät in schematischer Darstellung.

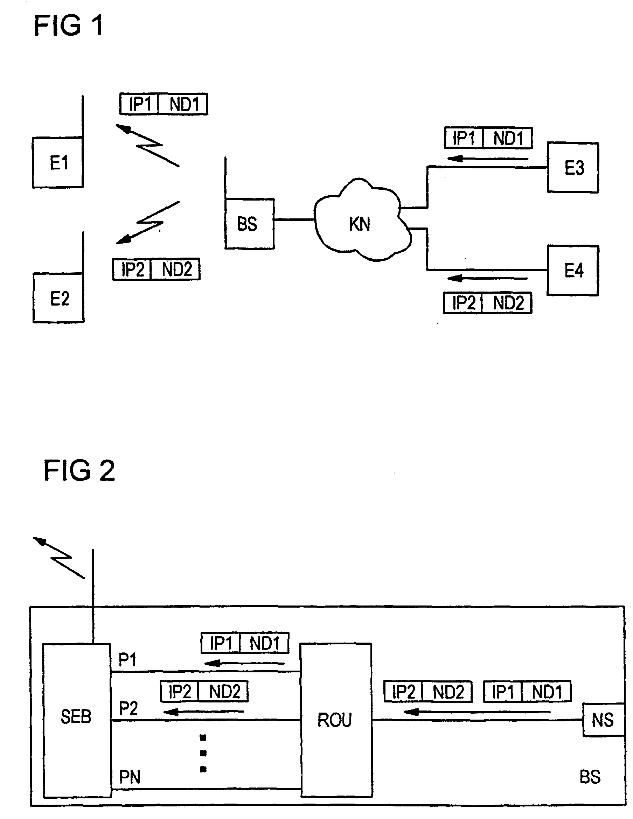

In Fig 1 ist ein Kommunikationssystem mit einer Basisstation BS und drahtlos daran gekoppelten mobilen Endgeräten E1 und E2 schematisch dargestellt. Eine drahtlose Ankopplung ist dabei jeweils durch einen stilisierten Blitz angedeutet. Die Basisstation BS ist ferner an ein Kommunikationsnetz KN, z.B. an das Internet oder an ein anderes zur Kommunikation von Datenverarbeitungsanlagen vorgesehenes Datennetz angeschlossen, an das weitere Endgeräte E3 und E4 angekoppelt sind und das in diesem Ausführungsbeispiel ein Internet-Protokoll (IP) unterstützt. Den mobilen Endgeräten E1, E2 ist weiterhin jeweils eine - hinsichtlich des Kommunikationsnetzes KN - eindeutige Netzadresse, d.h. hier eine IP-Adresse IP1 bzw. IP2 zugeordnet. Außerdem sind die mobilen Endgeräte E1, E2 in der Basisstation BS als über diese Basisstation BS erreichbar registriert.

Zwischen dem mobilen Endgerät E1 und dem weiteren Endgerät E3 sowie zwischen dem mobilen Endgerät E2 und dem weiteren Endgerät E4 besteht in diesem Ausführungsbeispiel jeweils eine Sprechverbindung. Im Rahmen dieser Sprechverbindungen werden von den weiteren Endgeräten E3, E4 zu den mobilen Endgeräten E1, E2 zu übertragende Sprachsignale digitalisiert und zur Reduktion des zu übertragenden Datenvolumens komprimiert. Die komprimierten Sprachdaten werden anschließend als Nutzdaten ND1 bzw. ND2 in asynchron zu übertragende Datenpakete eingefügt. Diese werden mit einer ihr jeweiliges Übertragungsziel identifizierenden Adressierungsinformation, d.h. mit den IP-Adressen IP1 bzw. IP2 der mobilen Endgeräte E1 bzw. E2 versehen und in das Kommunikationsnetz KN übertragen. Im Kommunikationsnetz KN werden die Datenpakete gemäß Internet-Protokoll anhand der ihnen beigefügten IP-Adressen IP1, IP2 bis zur Basisstation BS weitergeleitet, von wo aus die Datenpakete über die Luftschnittstelle zu den mobilen Endgeräten E1 bzw. E2 übermittelt werden.

In Fig 2 ist die Basisstation BS schematisch dargestellt, die als Funktionskomponenten eine Sende/Empfangseinrichtung SEB, eine Routereinrichtung ROU und eine Netzschnittstelle NS zum Anschluß der Basisstation BS an das Kommunikationsnetz KN enthält. Die Routereinrichtung ROU ist dabei einerseits mit der Netzschnittstelle NS verbunden, über die Daten mit dem Kommunikationsnetz KN ausgetauscht werden können, und andererseits über logische oder physikalische Ports P1,P2,...,PN mit der Sende/Empfangseinrichtung SEB gekoppelt. Durch die Sende/Empfangseinrichtung SEB wird eine Luftschnittstelle, z.B. gemäß DECT-Standard, zu den mobilen Endgeräten E1, E2 realisiert und eine Anzahl von drahtlosen Übertragungskanälen für einen Austausch digitaler Daten zwischen Basisstation BS und mobilen Endgeräten E1, E2 bereitgestellt. Die drahtlosen Übertragungskanäle sind dabei jeweils einem der Ports P1,P2,...,PN zugeordnet.

Im Rahmen der Sprechverbindungen zu den mobilen Endeinrichtungen E1, E2 werden die der Basisstation BS über die Netzschnittstelle NS übermittelten Datenpakete mit den Nutzdaten ND1 bzw. ND2 und den IP-Adressen IP1 bzw. IP2 von der Netzschnittstelle NS der Routereinrichtung ROU zugeleitet. In der Routereinrichtung ROU wird die IP-Adresse jedes eintreffenden Datenpakets gelesen und das durch die IP-Adresse spezifizierte Übertragungsziel des Datenpakets bestimmt. Anschließend wird überprüft, ob dieses Übertragungsziel ein über die Basisstation BS erreichbares mobiles Endgerät ist. Falls dies zutrifft, wird weiter ein für eine Verbindung zu diesem mobilen Endgerät verfügbarer Übertragungskanal der Luftschnittstelle ermittelt, woraufhin das Datenpaket über einen dem ermittelten Übertragungskanal zugeordneten Port P1,P2,... oder PN zu der Sende/Empfangseinrichtung SEB übertragen wird. In diesem Ausführungsbeispiel ist das mobile Endgerät E1 über einen dem Port P1 zugeordneten Übertragungskanal und das mobile Endgerät E2 über einen dem Port P2 zugeordneten Übertragungskanal mit der Basisstation gekoppelt. Entsprechend wird das durch die IP-Adresse IP1 gekennzeichnete Datenpaket über den Port P1 und das durch die IP-Adresse IP2 gekennzeichnete Datenpaket über den Port P2 zur Sende/Empfangseinrichtung SEB übertragen. Von der Sende/Empfangseinrichtung SEB werden die über die Ports P1 bzw. P2 empfangenen Datenpakete dann über die den Ports P1 bzw. P2 zugeordneten Übertragungskanäle der Luftschnittstelle zu den mobilen Endgeräten E1 bzw. E2 übermittelt.

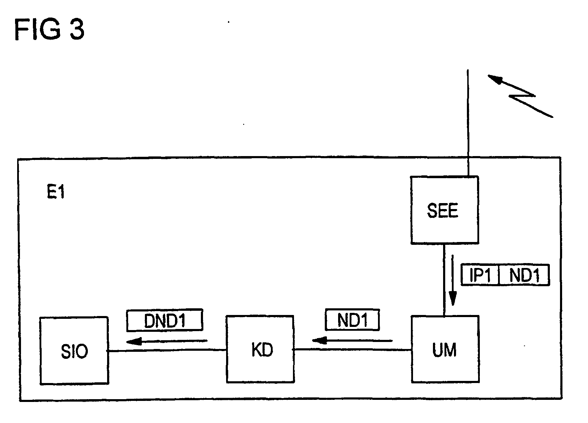

Fig 3 zeigt das mobile Endgerät E1 in schematischer Darstellung. Als Funktionskomponenten sind eine Sende/Empfangseinrichtung SEE, ein Umsetzmodul UM, eine Komprimier/Dekomprimiereinrichtung KD und ein Ein/Ausgabemodul SIO für Sprachdaten enthalten. Die einzelnen Funktionskomponenten sind in der Reihenfolge ihrer Aufzählung hintereinandergeschaltet.

Das im Rahmen der Sprechverbindung zum mobilen Endgerät E1 gesendete Datenpaket mit Nutzdaten ND1 und IP-Adresse IP1 wird von der Sende/Empfangseinrichtung SEE empfangen und zum Umsetzmodul UM weitergeleitet. Im Umsetzmodul UM werden die Nutzdaten ND1 aus dem Datenpaket extrahiert und mit den extrahierten Nutzdatenanteilen anderer im Rahmen der Sprechverbindung an das Endgerät E1 übertragener Datenpakete zu einem kontinuierlichen Nutzdatenstrom zusammengesetzt. Das Umsetzmodul UM wird häufig auch als Segmentation & Reassembly Module bezeichnet. Die extrahierten Nutzdaten ND1 werden daraufhin als Teil des Nutzdatenstroms der Komprimier/Dekomprimiereinrichtung KD zugeführt, wo die Nutzdaten ND1 bzw. der Nutzdatenstrom dekomprimiert werden. Durch die Dekomprimierung werden aus den Nutzdaten ND1 wieder die ursprünglichen digitalisierten Sprachsignale DND1 rekonstruiert, die schließlich als Teil eines dekomprimierten Nutzdatenstroms der Ein/Ausgabeeinrichtung SIO zugeführt und dort als Sprache ausgegeben werden.

Um im Rahmen der Sprechverbindung auch Sprachsignale in umgekehrter Richtung, d.h. vom mobilen Endgerät E1 zum weiteren Endgerät E3 zu übermitteln, ist der oben beschriebene Ablauf sinngemäß umzukehren. Die Sprachsignale werden in diesem Fall in der Ein/Ausgabeeinrichtung SIO eingegeben und von dort in digitaler Form der Komprimier/Dekomprimiereinrichtung KD zur Komprimierung zugeführt. Die komprimierten Sprachdaten werden anschließend im Umsetzmodul UM in Datenpakete eingefügt, die mit der IP-Adresse des weiteren Endgerätes E3 versehen werden und durch die Sende/Empfangseinrichtung SEE drahtlos zur Basisstation BS übertragen werden. In der Basisstation BS werden die empfangenen Datenpakete dann von der Sende/Empfangseinrichtung SEB über einen der Ports P1,P2,...,PN zur Routereinrichtung ROU übermittelt, wo anhand der IP-Adressen der Datenpakete entschieden wird, wohin ein jeweiliges Datenpaket weiterzuleiten ist. Im vorliegenden Fall erkennt die Routereinrichtung ROU, daß das durch die IP-Adresse spezifizierte Ziel-Endgerät E3 nicht zu den an die Basisstation BS gekoppelten mobilen Endgeräten E1, E2 gehört und leitet deshalb die mit dieser IP-Adresse versehenen Datenpakete über die Netzschnittstelle NS in das Kommunikationsnetz KN weiter. Im Kommunikationsnetz KN werden die Datenpakete dann gemäß Internet-Protokoll anhand der IP-Adressen zum Endgerät E3 weitergeleitet, wo die Sprachdaten wieder aus den Datenpaketen extrahiert und nach ihrer Dekomprimierung als Sprache ausgegeben werden.

## Patentansprüche

1. Kommunikationssystem mit einer Basisstation (BS) und mobilen Endgeräten (E1, E2), wobei
a) die Basisstation (BS) eine Luftschnittstelle zur Realisierung von drahtlosen, ersten Teilverbindungen zu den mobilen Endgeräten (E1, E2) und eine Netzschnittstelle (NS) zu einem Kommunikationsnetz (KN) aufweist, über das zweite Teilverbindungen zu weiteren Endgeräten (E3, E4) realisierbar sind, wobei für die ersten und zweiten Teilverbindungen jeweils eine Übermittlung von zu übertragenden Sprachdaten (ND1, ND2) innerhalb von asynchron zu übertragenden Datenpaketen erfolgt,
b) die einzelnen Datenpakete jeweils eine Adressierungsinformation (IP1, IP2) enthalten, die jeweils eines der mobilen oder weiteren Endgeräte (E1,...,E4) im Kommunikationsnetz (KN) eindeutig im Sinne eines Übertragungszieles spezifiziert und anhand der die Datenpakete innerhalb des Kommunikationsnetzes (KN) in Richtung des jeweiligen Übertragungszieles gelenkt werden,
c) die Basisstation (BS) eine Routereinrichtung (ROU) zum Zuordnen von im Rahmen bestehender erster oder zweiter Teilverbindungen eintreffenden Datenpaketen zu zweiten oder ersten Teilverbindungen in Abhängigkeit von der jeweils in den Datenpaketen enthaltenen Adressierungsinformation (IP1, IP2) enthält, und
d) die mobilen Endgeräte (E1, E2) jeweils eine Sprachkomprimiereinrichtung (KD) zur Komprimierung von zur Basisstation (BS) zu übertragenden Sprachdaten und/oder eine Sprachdekomprimiereinrichtung (KD) zur Dekomprimierung von zu dem jeweiligen mobilen Endgerät übertragenen, komprimierten Sprachdaten aufweisen.

2. Kommunikationssystem nach Anspruch 1,
**dadurch gekennzeichnet,**
**daß** das Kommunikationsnetz (KN) ein Datennetz zum Anschluß von Datenverarbeitungseinrichtungen ist.

3. Kommunikationssystem nach einem der vorhergehenden Ansprüche,
**dadurch gekennzeichnet,**
**daß** die Luftschnittstelle gemäß der ETSI-Standard-Definition DECT (Digital Enhanced Cordless Telecommunications) realisiert ist.

4. Kommunikationssystem nach Anspruch 1 oder 2,
**dadurch gekennzeichnet,**
**daß** die Luftschnittstelle gemäß der ETSI-Definition UMTS (Universal Mobile Telecommunication Service) realisiert ist.

5. Kommunikationssystem nach einem der vorhergehenden Ansprüche,
**dadurch gekennzeichnet,**
**daß** die Netzschnittstelle (NS) für Verbindungen zu einer Vermittlungseinrichtung in einem ISDN-Netz vorgesehen ist.

6. Kommunikationssystem nach einem der vorhergehenden Ansprüche,
**gekennzeichnet durch**
eine in der Basisstation (BS) enthaltene Detektoreinrichtung zur Überprüfung der Datenpakete im Hinblick auf Quasiechtzeitanforderungen von den Datenpaketen zugeordneten Anwendungen anhand von in einzelnen Datenpaketen enthaltenen Prioritätsinformationen und
eine in der Basisstation (BS) enthaltene Priorisiereinrichtung, die eine bevorzugte Übertragung von Quasiechtzeitanwendungen zugeordneten Datenpaketen veranlaßt.

7. Kommunikationssystem nach einem der vorhergehenden Ansprüche,
**dadurch gekennzeichnet,**
**daß** die Basisstation (BS) eine Sprachkomprimiereinrichtung zur Komprimierung der zu einem mobilen Endgerät zu übertragenden Sprachdaten und/oder eine Sprachdekomprimiereinrichtung zur Dekomprimierung der von einem mobilen Endgerät übertragenen, komprimierten Sprachdaten aufweist.

## Claims

1. Communication system comprising a base station (BS) and mobile terminals (E1, E2), in which
a) the base station (BS) exhibits an air interface for implementing wireless, first partial connections to the mobile terminals (E1, E2) and a network interface (NS) to a communication network (KN) via which second partial connections to further terminals (E3, E4) can be implemented, voice data (ND1, ND2) to be transmitted in each case being transmitted within data packets to be transmitted asynchronously for the first and second partial connections,
b) the individual data packets in each case contain an address information item (IP1, IP2) which in each case unambiguously specifies one of the mobile or further terminals (E1, ..., E4) in the communication network (KN) in the sense of a transmission destination and by means of which the data packets are directed in the direction of the respective transmission destination within the communication network (KN),
c) the base station (BS) contains a router (ROU) for allocating data packets arriving in existing first or second partial connections to second or first partial connections in dependence on the address information item (IP1, IP2) in each case contained in the data packets, and
d) the mobile terminals (E1, E2) in each case exhibit a voice compression device (KD) for compressing voice data to be transmitted to the base station (BS) and/or a voice decompression device (KD) for decompressing compressed voice data transmitted to the respective mobile terminal.

2. Communication system according to Claim 1,
**characterized in that**
the communication network (KN) is a data network for connecting data processing systems.

3. Communication system according to one of the preceding claims,
**characterized in that**
the air interface is implemented in accordance with the ETSI standard DECT (Digital Enhanced Cordless Telecommunications).

4. Communication system according to claim 1 or 2,
**characterized in that**
the air interface is implemented in accordance with the ETSI UMTS (Universal Mobile Telecommunications Service) definition.

5. Communication system according to one of the preceding claims,
**characterized in that**
the network interface (NS) is provided for connections to a switching system in an ISDN network.

6. Communication system according to one of the preceding claims,
**characterized by**
a detector device contained in the base station (BS) for checking the data packets with respect to quasi-real-time requirements of applications allocated to the data packets by means of priority information contained in individual data packets, and
a prioritizing device contained in the base station (BS) which initiates a preferred transmission of data packets allocated to quasi-real-time applications.

7. Communication system according to one of the preceding claims,
**characterized in that**
the base station (BS) exhibits a voice compression device for compressing the voice data to be transmitted to a mobile terminal and/or a voice decompression device for decompressing compressed voice data transmitted by a mobile terminal.

## Revendications

1. Système de communication comprenant une station de base (BS) et des terminaux mobiles (E1, E2),
a) la station de base (BS) comportant une interface radio pour la réalisation de premières liaisons partielles sans fil avec les terminaux mobiles (E1, E2) et une interface réseau (NS) vers un réseau de communication (KN), par l'intermédiaire duquel des deuxièmes liaisons partielles avec d'autres terminaux (E3, E4) sont réalisables, un transfert de données vocales (ND1, ND2) à transmettre se faisant, pour les premières et les deuxièmes liaisons partielles, à l'intérieur de paquets de données à transmettre en asynchrone,
b) les différents paquets de données contenant respectivement une information d'adressage (IP1, IP2) qui spécifie univoquement, au sens d'une destination de transmission, respectivement l'un des terminaux mobiles ou des autres terminaux (E1, ..., E4) dans le réseau de communication (KN) et sur la base de laquelle les paquets de données sont dirigés vers la destination de transmission respective à l'intérieur du réseau de communication (KN),
c) la station de base (BS) contenant un dispositif de routage (ROU) pour affecter des paquets de données entrants dans le cadre de premières ou de deuxièmes liaisons partielles existantes à des deuxièmes ou premières liaisons partielles en dépendance de l'information d'adressage (IP1, IP2) respectivement contenue dans les paquets de données et
d) les terminaux mobiles (E1, E2) comportant respectivement un dispositif de compression vocale (KD) pour la compression de données vocales à transmettre à la station de base (BS) et/ou un dispositif de décompression vocale (KD) pour la décompression de données vocales comprimées transmises au terminal mobile respectif.

2. Système de communication selon la revendication 1,
**caractérisé en ce que**
le réseau de communication (KN) est un réseau de données pour le raccordement de dispositifs de traitement de données.

3. Système de communication selon l'une des revendications précédentes,
**caractérisé en ce que**
l'interface radio est réalisée selon la définition de la norme d'ETSI DECT (Digital Enhanced Cordless Telecommunications).

4. Système de communication selon la revendication 1 ou 2,
**caractérisé en ce que**
l'interface radio est réalisée selon la définition de l'ETSI UMTS (Universal Mobile Telecommunication Service).

5. Système de communication selon l'une des revendications précédentes,
**caractérisé en ce que**
l'interface réseau (NS) est prévue pour des liaisons avec un dispositif de commutation dans un réseau RNIS.

6. Système de communication selon l'une des revendications précédentes,
**caractérisé par**
un dispositif détecteur contenu dans la station de base (BS) pour vérifier les paquets de données pour ce qui est d'exigences en quasi temps réel d'applications affectées aux paquets de données, sur la base d'informations de priorité contenues dans des paquets de données distincts, et par un dispositif de priorisation contenu dans la station de base (BS), lequel provoque une transmission préférentielle de paquets de données affectés à des applications en quasi temps réel.

7. Système de communication selon l'une des revendications précédentes,
**caractérisé en ce que**
la station de base (BS) comporte un dispositif de compression vocale pour la compression des données vocales à transmettre à un terminal mobile et/ou un dispositif de décompression vocale pour la décompression des données vocales comprimées transmises par un terminal mobile.
